(19) Europäisches Patentamt
European Patent Office
Office européen des brevets

(11) Veröffentlichungsnummer: **0 300 330 B1**

(12) # EUROPÄISCHE PATENTSCHRIFT

(45) Veröffentlichungstag der Patentschrift: **17.04.91 Patentblatt 91/16**

(51) Int. Cl.$^5$: **H01M 10/36**, H01M 4/60

(21) Anmeldenummer: **88111108.2**

(22) Anmeldetag: **12.07.88**

(54) **Anordnung zur reversiblen Speicherung elektrischer Energie.**

(30) Priorität: **21.07.87 DE 3724056**

(43) Veröffentlichungstag der Anmeldung: **25.01.89 Patentblatt 89/04**

(45) Bekanntmachung des Hinweises auf die Patenterteilung: **17.04.91 Patentblatt 91/16**

(84) Benannte Vertragsstaaten: **BE DE FR GB NL**

(56) Entgegenhaltungen:
**EP-A- 0 108 954**
**EP-A- 0 167 321**
**EP-A- 0 249 177**

(73) Patentinhaber: **BASF Aktiengesellschaft**
**Carl-Bosch-Strasse 38**
**W-6700 Ludwigshafen (DE)**

(72) Erfinder: **Naegele, Dieter, Dr.**
**Gudastrasse 2**
**W-6520 Worms 1 (DE)**
Erfinder: **Neese, Petra, Dr.**
**Bergstrasse 50 a**
**W-6900 Heidelberg (DE)**

**EP 0 300 330 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die vorliegende Erfindung betrifft eine Anordnung zur reversiblen Speicherung elektrischer Energie beliebiger Polarität und variabler elektrischer Spannung, enthaltend als wesentliche Bestandteile mindestens zwei Elektroden, die als aktive Materialien durch chemische oder elektrochemische Oxidation oder Reduktion leitfähig gemachte organische Verbindungen enthalten, die in direktem physikalischen Kontakt miteinander stehen.

Zur Speicherung von elektrischer Energie werden üblicherweise elektrochemische Zellen (Batterien) verwendet. In solchen Systemen wird der Energieinhalt einer elektrochemischen Reaktion ausgenutzt, z.B. im Bleiakkumulator die bei der Oxidation von Blei bzw. der Reduktion von Bleisalzen freiwerdende Energie. Die Prozesse des Be- und Entladens in elektrochemischen Zellen laufen relativ langsam ab und die Systeme besitzen eine eindeutige Polarität. Die Spannung verändert sich über den Be- und Entladezyklus kaum und es lassen sich relativ große Energiemengen speichern.

Neben den "klassischen" elektrochemischen Sekundärzellen wie dem Bleiakkumulator oder dem Ni/Cd-Akkumulator wurden in den letzten Jahren auch zahlreiche Untersuchungen durchgeführt, die sich mit elektrochemischen Sekundärzellen, die elektrisch leitfähige Polymere enthalten, beschäftigen. Derartige Systeme sind z.B. in der EP-A-36 118 beschrieben, auf die hier wegen näherer Einzelheiten verwiesen werden soll.

Ein völlig anderes Prinzip liegt der Speicherung elektrischer Energie mit Hilfe von Kondensatoren zugrunde ; in diesen Systemen nutzt man den kapazitiven Effekt.

Der prinzipielle Aufbau eines Kondensators sieht dergestalt aus, daß zwei elektrisch leitfähige Elektroden durch einen Isolator getrennt werden. Eine derartige Anordnung kann im Vergleich zu elektrochemischen Sekundärzellen sehr schnell (d.h. mit hohen Frequenzen) und mit beliebiger Polarität be- und entladen werden (eine Ausnahme stellen die sogenannten Elektrolytkondensatoren dar, in denen die Polarität festgelegt ist). Die Spannung des Systems (zwischen den beiden Elektroden) steigt proportional mit der gespeicherten Ladungsmenge ; die gespeicherte Ladung ist jedoch um Größenordnungen niedriger als in elektrischen Sekundärzellen.

Aus dem vorstehenden wird verständlich, daß es wünschenswert wäre, ein System zur reversiblen Speicherung elektrischer Energie zur Verfügung zu haben, welches die Vorteile der oben beschriebenen Systeme (elektrochemische Zelle und Kondensator) in sich vereint, d.h. bei hoher Speicherfähigkeit schnell und mit beliebiger Polarität entladen werden kann.

Diese Aufgabe wird durch die eingangs definierte Anordnung zur reversiblen Speicherung von elektrischer Energie gemäß Anspruch 1 gelöst.

Bevorzugte Ausführungsformen der Erfindung sind den Unteransprüchen zu entnehmen.

Die erfindungsgemäße Anordnung enthält mindestens zwei, durch chemische oder elektrochemische Oxidation oder Reduktion leitfähig gemachte organische Materialien, z.B. sogenannte charge-transfer-Salze oder sogenannte intrinsisch leitfähige Polymere, wobei letztere bevorzugt werden.

Diese leitfähig gemachten Materialien bilden das aktive Material der beiden Elektroden der Anordnung ; prinzipiell können beide Elektroden gleiche oder unterschiedliche aktive Materialien enthalten.

Charge-transfer-Salze sind an sich bekannt und in der Literatur beschrieben ; stellvertretend sei hier nur auf D.J. Sandman et al, J. Chem. Soc. Perkin Trans.II, 1578 (1980) verwiesen.

Beispiele für intrinsisch leitfähige Polymere sind Polyacetylen, Polymere aus der Gruppe der 5- und 6-gliedrigen Heterocyclen mit Stickstoff, Sauerstoff oer Schwefel als Heteroatomen und einem konjugierten $\pi$-Elektronensystem, Anilinpolymere und Polyphenylene. Derartige Polymere wie auch Verfahren zu ihrer Herstellung sind an sich bekannt und in der Literatur beschrieben, z.B. in der EP-A-36 118 und der EP-A-99 055 um nur zwei Druckschriften zu nennen.

Bevorzugt werden Thiophen-, Pyrrol- und Anilinpolymere, insbesondere die beiden letztgenannten Polymerarten. Diese werden nachstehend näher beschrieben.

Zu den Polymeren des Pyrrols zählen z.B. ganz allgemein Homo- und Copolymere von Pyrrol und substituierten Pyrrolen sowie Copolymere dieser Monomere mit anderen Comonomeren. Nur beispielhaft seien als Monomere Pyrrol und an den C-Atomen halogen- oder alkylsubstituierte Pyrrole sowie als Comonomere Cyclopentadien, Acetylen, Imidazol, Thiazol, Furan, Thiophen und Pyrazin genannt, wie sie z.B. in der EP-A 36 118 beschrieben werden. Vorzugsweise enthalten derartige Pyrrolpolymere 50 bis 99 Gew.% Pyrrol und 1 bis 50 Gew.% substituierte Pyrrole und/oder andere Comonomere.

Die zweite Gruppe von Polymeren, die als aktives Material für die Kathode bevorzugt wird, sind Polymere des Anilins, d.h. Homopolymere von Anilin oder substituierten Anilinderivaten oder Copolymere dieser Monomere mit anderen Monomeren. Derartige Polymere, ihre Eigenschaften und Verfahren zur Herstellung sind an sich bekannt. Nähere Einzelheiten sind z.B. E.M. Genies et al, Mol. Cryst. Liq. Cryst. (1985), Vol. 121, Seiten 181-186 und A.G. McDiarmid et al, l.c., Vol. 121, Seiten 173-180 zu entnehmen.

Die elektrochemisch reversibel oxidierbaren oder reduzierbaren Polymeren können in dotierter oder undotierter Form, d.h. mit oder ohne eingelagertem Gegenion beim Aufbau der erfindungsgemäßen Anordnung eingesetzt werden.

Prinzipiell können beide Elektroden aus unterschiedlichen aktiven Materialien aufgebaut sein, doch wird im allgemeinen ein Aufbau aus gleichen Materialien bevorzugt, insbesondere ein Aufbau aus Anilin- und Pyrrolpolymeren, wie sie oben beschrieben wurden.

Die Form, in der die aktiven Materialien eingesetzt werden, kann beliebig sein ; es können z.B. sowohl Pulver als auch Folien eingesetzt werden.

Die elektrisch leitfähigen organischen Materialien liegen vorzugsweise jeweils in teilweise dotiertem Zustand vor oder ein Material wird in sehr hoch (vorzugsweise vollständig) dotiertem Zustand und das andere in sehr niedrig (vorzugsweise nicht) dotiertem Zustand eingesetzt. Es ist jedoch prinzipiell auch möglich, zwei undotierte Materialien oder mit unterschiedlichen Vorzeichen dotierte Materialien einzusetzen, wobei natürlich in diesen Fällen vorauszusetzen ist, daß die leitfähigen organischen Materialien sowohl positiv als auch negativ dotiert werden können, da beim Be- und Entladen die Polarität sich umkehrt.

Es ist prinzipiell nicht erforderlich, einen Elektrolyten zuzugeben, da die geringen Mengen an Leitsalz, die die leitfähigen Materialien aufgrund ihrer Dotierung enthalten, ausreichen, in einigen Fällen kann es jedoch vorteilhaft sein, die Anordnung mit einem festen oder flüssigen Elektrolyten zu tränken, um besonders gute Ergebnisse zu erzielen.

Als Elektrolyte eignen sich für diesen Zweck insbesondere Lösungen der für die Dotierung der elektrisch leitfähigen Materialien verwendeten Leitsalze.

Dabei werden Lösungen oder Suspensionen von ionischen oder ionisierbaren Verbindungen als Leitsalz in einem gegenüber den Elektrodenmaterialien indifferenten Lösungsmittel bevorzugt. Als Leitsalze sind beispielsweise Alkalimetall-, Erdalkalimetall-, Ammonium- oder Phosphoniumsalze der Perchlorsäure, Tetrafluorborsäure, Hexafluoroarsensäure, Hexafluoroantimonsäure, Hexafluorophosphorsäure, Benzolsulfonsäure, Trifluormethansulfonsäure oder Toluolsulfonsäure zu nennen. Besonders bevorzugt wird $LiClO_4$ als Leitsalz eingesetzt. Weitere Beispiele für geeignete Leitsalze sind z.B. der DE-A-34 28 843, dort insbesondere der Seite 8, zu entnehmen.

Es ist auch möglich und häufig vorteilhaft, Mischungen mehrerer Leitsalze zu verwenden.

Eine weitere Klasse von als Leitsalze geeigneten Verbindungen wird durch die allgemeine Formel

$$[XAX]^+Y^-$$

charakterisiert, wobei

X eine monomere organische, mindestens ein Heteroatom enthaltende C-H acide Verbindung oder ein durch oxidative dehydrierende Dimerisierung erhaltenes Dimeres hiervon,

A ein Wasserstoff-, Alkalimetall- oder Ammoniumkation, und

Y ein geeignetes Anion, vorzugsweise aus der Gruppe $I_3^-$, $Br^-$, $ClO_4^-$, $NO_3^-$ oder $PF_6^-$

darstellen.

Bei diesen Elektrolytsalzen handelt es sich im Gegensatz zu den üblichen Lösungen von Salzen des Typs $A^+ Y^-$ in Lösungsmitteln des Typs X um feste leitfähige Substanzen.

Als Beispiele für X seien hier nur stellvertretend lineare oder cyclische Säureamide, Amine, Ester, Ketone oder Nitrile genannt. Nähere Einzelheiten hierzu und Verfahren zur Herstellung derartiger Elektrolytsalze sind in der DE-A 33 28 636 beschrieben.

Als Beispiele seien hier

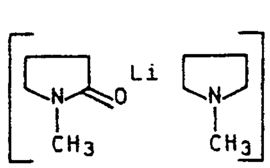 $ClO_4^-$ und 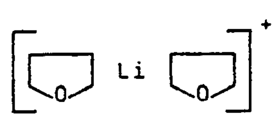 $ClO_4^-$

genannt.

Als Elektrolytlösungsmittel werden vorzugsweise gegenüber den Elektrodenmaterialien inerte Lösungsmittel eingesetzt. Als vorteilhaft haben sich hier z.B. Dimethoxiethan, Diethylenglykoldimethylether, Tetrahydrofuran und dessen Derivate, Propylencarbonat, γ-Butyrolacton und dessen Derivate, N-Methylpyrrolidon, Acetonitril, Dimethylformamid, Dimethylsulfoxid, Sulfolan und dessen Derivate, Ethylensulfit und Dimethylsulfit herausgestellt, wie sie z.B. in der EP-A 36 118 beschrieben sind. Propylencarbonat ist ein besonders bevorzugtes Elektrolytlösungsmittel.

Eine weitere Gruppe geeigneter Elektrolytlösungsmittel sind unvernetzte Dimere oder Oligomere heterocyclischer Verbindungen wie Tetrahydrofuran, Dioxolan, Dioxan, Pyrrolidin, Pyrrolidon, Tetrahydropyran, Morpholin, Piperidin, Piperazin, Indol, Imidazol und Thiophen, wie sie in der DE-A 34 28 848 näher beschrieben sind.

Selbstverständlich sind auch Mischungen der vorgenannten Elektrolytlösungsmittel verwendbar, häufig bringt die Verwendung solcher Mischungen auch Vorteile mit sich.

Die Konzentration der Leitsalze in den Elektrolytlösungsmitteln liegt vorzugsweise im Bereich von 0,01 bis 2 mol, insbesondere von 0,1 bis 1 mol Leitsalz pro Liter Elektrolytlösungsmittel.

Ein wesentlicher Vorteil der erfindungsgemäßen Anordnung ist darin zu sehen, daß überhaupt kein Separator benötigt wird. Es hat sich im Laufe der Untersuchungen herausgestellt, daß organische, durch Dotierung leitfähig gemachte Materialien in unterschiedlichem Dotierungszustand miteinander in direkten physikalischen Kontakt gebracht werden können, ohne daß ein Kurzschluß (wie es eigentlich zu erwarten wäre) auftritt. Zwar ist beim direkten Kontaktieren anfänglich eine verringerte Kapazität und eine erhöhte Selbstentladung zu beobachten, doch nach mehrmaligem Be- und Entladen der Anordnungen ist dieser Abfall wieder kompensiert. Es ist auch möglich, die aktiven Elektrodenmaterialien vor dem Einbau in die erfindungsgemäßen Anordnungen einer Vorbehandlung mit einem Oxidations- oder Reduktionsmittel zu unterziehen oder einer Vorcyclisierung zu unterwerfen. Vermutlich bildet sich aufgrund dieser Vorcyclisierung eine Isolationsschicht auf der Oberfläche, die die Funktion eines Separators übernimmt.

Da die elektrische Leitfähigkeit von intrinsisch leitfähigen Polymeren stark von ihrem Dotierungsgrad abhängt und mit abnehmendem Dotierungsgrad sinkt, ist es im allgemeinen vorteilhaft, zur Verbesserung der kinetischen Eigenschaften der erfindungsgemäßen Anordnung die aktiven Elektrodenmaterialien mit Ableitern zu kontaktieren, die unabhängig vom jeweiligen Dotierungsgrad des aktiven Materials eine hohe Leitfäigkeit aufweisen. Nur beispielsweise seien hier Platinblech oder Goldblech als Ableiter genannt.

Es versteht sich, daß mehr als zwei Schichten von organisch leitfähigen Materialien eingesetzt werden können, um mehrere Anordnungen aus jeweils zwei Elektroden parallel oder in Reihe zu schalten. Derartige Schaltungen sind beim Aufbau von elektrochemischen Zellen oder beim Einsatz von Kondensatoren in elektronischen Schaltungen gebräuchlich.

Der Auf- und Zusammenbau der erfindungsgemäßen Anordnungen erfordert keine speziellen Verfahren. Beispielsweise können zwei Folien aus elektrisch leitfähigen Polymeren aufeinandergelegt und jeweils mit einem Ableiter versehen werden, um eine erfindungsgemäße Anordnung zur reversiblen Speicherung von elektrischer Energie zu erhalten.

Die erfindungsgemäßen Anordnungen könnten im Prinzip als elektrochemische Zellen mit kondensatortypischer Spannungscharakteristik bezeichnet werden, da zum einen relative hohe Kapazitäten erreicht werden, die eher in den Bereich von elektrochemischen Zellen einzuordnen wären, andererseits aber aufgrund der schnellen Cyclisierbarkeit, der nicht festgelegten Polarität und des linearen Strom/Spannungsverlaufs kondensatortypische Eigenschaften vorhanden sind.

Ein weiterer Vorteil der erfindungsgemäßen Anordnungen ist der "integrierte Überladungsschutz". Erhöht man die Zellspannung über die Normalspannung, so geschieht das dadurch, daß die negative Elektrode im Potential stark absinkt, während die positive Elektrode ihr Potential in etwa beibehält, d.h. es sind keine Zersetzungsreaktionen an dieser Elektrode zu befürchten.

Die erreichbaren Kapazitätswerte hängen natürlich von der Art des eingesetzten elektrisch leitfähigen Materials, der Fläche der Elektroden ab, doch sind bei der Anwendung von Mehrschichtsystemen oder gewickelten Anordnungen Kapazitätswerte von bis zu 100 Farad zu erreichen ; diese Werte liegen weit über denen leistungsfähiger Kondensatoren bei vergleichbarem Raumbedarf.

Durch diese relativ große Menge an gespeicherter Energie in Verbindung mit der schnellen Entladekinetik und der guten Zyklisierbarkeit sind die erfindungsgemäßen Anordnungen insbesondere als Notstromquellen für Rechenspeicher ("computer memory back up powersource") und ähnliche Anwendungen geeignet.

Beispiel 1

Eine 9,62 $cm^2$ große ud 55 µm dicke, elektrochemisch auf 3,6 Volt gegen $Li/Li^+$ geladene, mit 0,5 m $LiClO_H$/Propylencarbonat gequollene und mit diesem Elektrolyten befeuchtete Polypyrrolfolie wurde auf einen metallisch leitfähigen Ableiter wie z.B. ein Platinblech aufgelegt. Auf dieses Polymer wurde eine weitere Folie des gleichen Materials aufgelegt, das sich jedoch im elektrisch entladenen Zustand (2,5 Volt gegen $Li/Li^+$) befand. Auf dieses wiederum wurde eine zweite Ableitelektrode aus Platin aufgelegt. Diese Anordnung zeite eine konstante Spannung von +0,5 Volt. Ließ man nun in Entladerichtung einen konstanten Strom von 0,3 $mA/cm^2$ fließen, so verringerte sich die Spannung langsam, erfuhr eine Vorzeichenumkehr und erreichte nach 30 Minuten einen Wert von -1,0 Volt. Unterbrach man nun den Strom, so stellte sich nach einigen Minuten eine

konstante Spannung von 0,5 Volt ein. Dieser Spannungswert veränderte sich über einen Zeitraum von 24 h nicht nennenswert. Der beschriebene Umpolungsprozess konnte umgekehrt und in beiden Richtungen beliebig oft - das Experiment wurde nach 35 Zyklen abgebrochen - wiederholt werden. Die in beiden Polarisationsrichtungen gespeicherte Ladung konnte mit 100% Ausbeute wiedergewonnen werden.

Beispiel 2

Anordnung wie in Beispiel 1, mit dem Unterschied, daß sich beide Polymerfolien im gleichen Ladungs- und damit Potentialzustand befanden und zwar in einem Zustand, der einer Aufladung auf die Hälfte der für eine Einzelfolie möglichen Aufladung entspricht. Eine derartige Anordnung zeigte eine konstante Ausgangsspannung von 0,0 Volt. Sie konnte wie bei Beispiel 1 in beide Ladungsrichtungen Energie speichern und zwar mit vergleichbarer Kapazität, Spannungslage, Zyklenfestigkeit und Selbstentladung.

## Ansprüche

1. Anordnung zur reversiblen Speicherung elektrischer Energie beliebiger Polarität und variabler elektrischer Spannung, enthaltend als wesentliche Bestandteile mindestens zwei Elektroden, die als aktive Materialien durch chemische oder elektrochemische Oxidation oder Reduktion leitfähig gemachte organische Verbindungen enthalten, die in direktem physikalischen Kontakt miteinander stehen.
2. Anordnung nach Anspruch 1, dadurch gekennzeichnet, daß die Elektroden mit einem metallischen Ableiter kontaktiert sind.
3. Anordnung nach den Ansprüchen 1 und 2, dadurch gekennzeichnet, daß als aktives Material der Elektroden ein intrinsisch leitfähiges Polymer eingesetzt wird.
4. Anordnung nach Anspruch 3, dadurch gekennzeichnet, daß das intrinsisch leitfähige Polymer Polyacetylen, Polyphenylen oder ein Pyrrol-, Thiophen- oder Anilinpolymer ist.

## Claims

1. An arrangement for the reversible storage of electrical energy of any polarity and variable electrical voltage, containing, as essential components, two or more electrodes which contain, as active materials, organic compounds which have been rendered conductive by chemical or electrochemical oxidation or reduction and are in direct physical contact with one another.
2. An arrangement as claimed in claim 1, wherein the electrodes are in contact with a metallic conductor.
3. An arrangement as claimed in claim 1 or 2, wherein the active electrode material used is an intrinsically conductive polymer.
4. An arrangement as claimed in claim 3, wherein the intrinsically conductive polymer is polyacetylene, polyphenylene or a pyrrole, thiophene or aniline polymer.

## Revendications

1. Agencement pour l'accumulation réversible d'énergie électrique de polarité quelconque et de tension électrique variable, contenant, à titre de composants essentiels, au moins deux électrodes qui contiennent, à titre de substances actives, des composés organiques rendus conducteur par réduction ou oxydation chimique ou électrochimique, qui sont en contact physique mutuel direct.
2. Agencement suivant la revendication 1, caractérisé en ce que les électrodes sont en contact avec un conducteur métallique.
3. Agencement suivant les revendications 1 et 2, caractérisé en ce qu'à titre de substance active des électrodes, on met en oeuvre un polymère à conductibilité intrinsèque.
4. Agencement suivant la revendication 3, caractérisé en ce que le polymère à conductibilité intrinsèque est le polyacétylène, le polyphénylène, ou un polymère du pyrrole, du thiophène ou de l'aniline.